# EUROPEAN PATENT SPECIFICATION

(11) **EP 2 939 513 B1**
(45) Date of publication and mention of the grant of the patent: **06.11.2019**
(21) Application number: 14177615.3
(22) Date of filing: 18.07.2014
(51) Int. Cl.: A01D 34/00, A01D 75/18

(54) **Lawn mower robot and control method thereof**
Rasenmäherroboter und Steuerungsverfahren dafür
Robot pour tondre le gazon et son procédé de commande

(30) Priority: 30.04.2014 KR 20140052427
(43) Date of publication of application: 04.11.2015
(73) Proprietor: LG Electronics Inc., Seoul 150-721 (KR)
(72) Inventor: Song, Hyunsup, 153-802 Seoul (KR); Lee, Jaehoon, 153-802 Seoul (KR); Sun, Changhwa, 153-802 Seoul (KR)
(74) Representative: Vossius & Partner Patentanwälte Rechtsanwälte mbB

(56) References cited:
- EP-A1- 2 120 122
- EP-A1- 2 689 650
- EP-A2- 2 390 741
- WO-A1-2004/072750

## Description

The present invention relates to a lawn mower robot and a control method thereof, and more particularly, to a lawn mower robot, which may sense an obstacle within a work area and then decelerate, and a control method thereof.

In general, lawn mowers are apparatuses to mow a lawn planted in a yard of a home or on a playground. Such lawn mowers may be divided into lawn mowers for homes and lawn mowers for tractors used on farms.

Further, there are a walk behind type lawn mower pushed by a user behind the lawn mower to mow a lawn and a hand type lawn mower portable by a user.

However, both types of lawn mowers are operated directly by users and thus cause inconvenience.

Particularly, since it is difficult for modern people themselves to mow a lawn in a yard using lawn mowers, people generally hire a worker to mow the lawn and thus labor costs are inevitably generated.

Therefore, automatic robot type lawn mowers to prevent such additional costs and reduce labor have been developed. Various research into mobility control of automatic robot type lawn mowers has been performed.
EP 2390741 A2 discloses a system for autonomous machine management comprising a number of autonomous machines, a number of nodes, a performance estimation module, and a navigation system. The number of autonomous machines is configured to perform area coverage tasks in a worksite. The number of nodes is configured to define a number of worksite areas for the worksite. The performance estimation module is executed by a processor unit and configured to calculate a percentage of work completed in the number of worksite areas.

Accordingly, the present invention is directed to a lawn mower robot and a control method thereof that substantially obviate one or more problems due to limitations and disadvantages of the related art.

An object of the present invention is to provide a lawn mower robot and a method of controlling the same.

This object is achieved with the features of the independent claims. The dependent claims relate to aspect of the invention.

Another object of the present invention is to provide a lawn mower robot, which decelerates upon collision with an obstacle and may thus reduce the degree of impact applied to the lawn mower robot, and a control method thereof.

Another object of the present invention is to provide a lawn mower robot ,which may improve obstacle sensing efficiency, and a control method thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a control method of a lawn mower robot includes sensing whether or not an obstacle is present during driving at a normal velocity, decelerating the lawn mower robot when the obstacle is sensed, sensing whether or not the lawn mower robot collides with the obstacle in the decelerated state, and differently driving the lawn mower robot if a collision of the lawn mower robot with the obstacle is sensed and if a collision of the lawn mower robot with the obstacle is not sensed.

In the sensing as to whether or not an obstacle is present, a distance from the obstacle may be sensed.

In the deceleration of the lawn mower robot, the lawn mower robot is decelerated to different velocities according to distances from the obstacle.

In the deceleration of the lawn mower robot, a deceleration time may vary according to distances from the obstacle.

In the deceleration of the lawn mower robot, a distance during which the lawn mower robot is decelerated may be longer than the distance from the obstacle.

In the driving of the lawn mower robot, if the collision is sensed, the lawn mower robot may be stopped and change direction.

In the driving of the lawn mower robot, the lawn mower robot may be accelerated to the normal velocity after change of direction.

In the driving of the lawn mower robot, if the collision is not sensed, the lawn mower robot may be accelerated to the normal velocity under the condition that the direction of the lawn mower robot is maintained.

The obstacle may include a fixed obstacle or a movable obstacle.

A cutter cutting a lawn may be operated during each of the sensing as to whether or not an obstacle is present, the deceleration of the lawn mower robot, the sensing as to whether or not the lawn mower robot collides with the obstacle in the decelerated state, and the driving of the lawn mower robot. Of course, if the lawn mower robot collides with the obstacle, operation of the cutter may be stopped, the lawn mower robot may move backward, the cutter may be operated again, and then the direction of the lawn mower robot may be changed.

In another aspect of the present invention, a control method of a lawn mower robot includes sensing whether or not an obstacle is present during driving at a normal velocity, decelerating the lawn mower robot when the obstacle is sensed, and
changing direction of the lawn mower robot and then drive the lawn mower robot when the lawn mower robot collides with the obstacle, wherein a cutter is operated during each of the sensing as to whether or not an obstacle is present, the deceleration of the lawn mower robot, and the change of the direction of the lawn mower robot and driving of the lawn mower robot.

In the deceleration of the lawn mower robot, a distance during which deceleration of the lawn mower robot is carried out may be longer than a distance from the obstacle.

In the deceleration of the lawn mower robot, the lawn mower robot is decelerated to different velocities according to distances from the obstacle.

In yet another aspect of the present invention, a lawn mower robot includes a boundary indication unit including a boundary wire defining a work area and a main body moving within the work area defined by the boundary wire, wherein the main body includes a first sensing unit sensing an obstacle located within the work area, a second sensing unit sensing whether or not the main body collides with the obstacle, and a controller controlling movement of the main body according to signals sensed by the first sensing unit and the second sensing unit.

The first sensing unit may sense a distance from the obstacle to the main body.

The controller may decelerate the main body to different velocities according to distances from the obstacle.

The controller may decelerate the main body during a distance longer than the distance from the obstacle.

The controller may stop the main body and then change the direction of the main body, if the main body collides with the obstacle.

The controller may accelerate the main body to the normal velocity under the condition that the direction of the main body is maintained, if the main body does not collide with the obstacle at a position of the obstacle, judged by the first sensing unit.

The main body may further include a cutter cutting a lawn, and the controller may operate the cutter during driving of the first sensing unit or the second sensing unit.

The first sensing unit may includes ultrasonic sensors installed on the front surface of the main body and a guide surface guiding ultrasonic waves transmitted from the ultrasonic sensors and extending in parallel with the ground surface.

The guide surface may block a part of ultrasonic waves traveling downward among the ultrasonic waves transmitted from the ultrasonic sensors and guide the ultrasonic waves in the horizontal direction so that an object not exceeding a designated height is not sensed as an obstacle.

The first sensing unit may include a plurality of ultrasonic sensors and the guide surface may form one flat surface so as to guide ultrasonic waves transmitted from the plurality of ultrasonic sensors.

The width of the guide surface may be greater than the overall width of the plurality of ultrasonic sensors.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIGs. 1A and 1B are views illustrating a main body of a lawn mower robot in accordance with one embodiment of the present invention;
FIG. 2 is a block diagram of FIGs. 1A and 1B;
FIG. 3 is a control flowchart of the lawn mower robot in accordance with the embodiment of the present invention;
FIGs. 4A and 4B are views illustrating driving of the lawn mower robot in accordance with the embodiment of the present invention; and
FIG. 5 is a view illustrating a sensing method of the lawn mower robot in accordance with the embodiment of the present invention.

Reference will now be made in detail to the preferred embodiments of the present invention, examples of which are illustrated in the accompanying drawings.

In the drawings, the sizes or shapes of elements may be exaggerated for clarity and convenience of description. Further, terms specially defined in the following description in consideration of the configuration and functions of the present invention may be changed according to the intention of a user or an operator or a usual practice. The definitions of these terms should be determined based on the whole content of this specification.

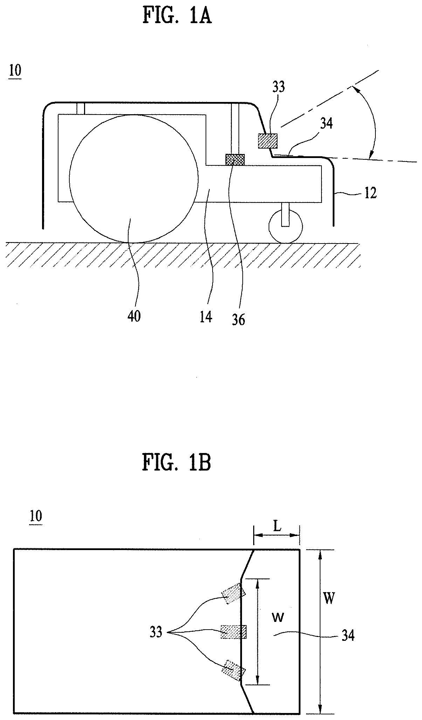

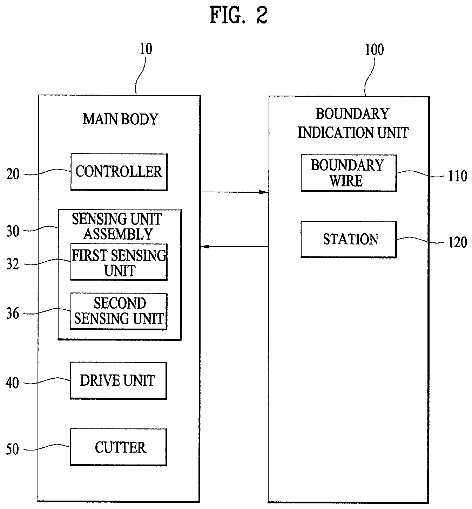

FIGs. 1A and 1B are views illustrating a main body of a lawn mower robot in accordance with one embodiment of the present invention and FIG. 2 is a block diagram of FIGs. 1A and 1B. Hereinafter, with reference to FIGs. 1A and 1B and FIG. 2, the lawn mower robot will be described.

Particularly, FIG. 1A is a cross-sectional view of the main body of the lawn mower robot and FIG. 1B is an elevation view of the main body of the lawn mower robot.

The lawn mower robot may include a main body 10 movably provided so as to cut a lawn and a boundary indication unit 100 defining a work area in which the main body 10 moves to conduct operation.

The boundary indication unit 100 may include a boundary wire 110 forming the boundary of the work area and a station 120 supplying current to the boundary wire 110. That is, the boundary wire 110 may be connected to the station 120 and generate electromagnetic waves due to current supplied from the station 120. Further, the main body 10 may be connected to the station 120 and thus, the main body 10 may be charged.

A cutter 50 cutting a lawn may be provided in the main body 10 of the lawn mower robot. The cutter 50 may be configured such that a sharp blade is rotatable.

A drive unit 40 which may move and rotate the main body 10 in a desired direction is provided in the main body 10. The drive unit 40 may include a plurality of rotatable wheels and the respective wheels may be individually rotated and thus, the main body 10 may be rotated in a desired direction.

The main body 10 may include a sensing unit assembly 30 sensing the boundary wire 110. The sensing unit assembly 30 may sense electromagnetic waves generated by current flowing in the boundary wire 110 and thus, acquire information regarding whether or not the main body 10 reaches the boundary wire 110, information regarding whether or not the main body 10 is present within a closed loop formed by the boundary wire 110, and information regarding whether or not the main body 10 drives along the boundary wire 110.

Further, the sensing unit assembly 30 may sense various pieces of information regarding the moving distance and moving velocity of the main body 10 and relative position change of the main body 10 according to movement.

The sensing unit assembly 30 may include a first sensing unit 32 sensing an obstacle located within the work area and a second sensing unit 36 sensing whether or not the main body 10 collides with an obstacle.

The first sensing unit 32 may detect presence of an obstacle even if the first sensing unit 32 does not contact the obstacle and sense a distance between the obstacle and the main body 10 at the current position of the main body 10. The first sensing unit 32 may include a plurality of ultrasonic sensors and sense an obstacle separated from the main body.

Therefore, a signal sensed by the first sensing unit 32, i.e., information regarding whether or not an obstacle is present or information regarding the distance from the obstacle, may be transmitted to a controller 20.

The second sensing unit 36 may sense whether or not the main body 10 collides with an obstacle, i.e., contacts the obstacle. When the main body 10 contacts the obstacle, pressure of a designated intensity or more is applied to the second sensing unit 36 and thus, the second sensing unit 36 may sense collision.

A signal sensed by the second sensing unit 36, i.e., information regarding whether or not the main body 10 collides with an obstacle, may be transmitted to the controller 20.

The main body 10 may drive the drive unit 40 using information sensed by the sensing unit assembly 30. That is, the controller 20 may control driving of the main body 10 using information measured by the sensing unit assembly 30 and thus, drive the drive unit 40 so that the main body 10 may be located within the work area.

The first sensing unit 32 may include ultrasonic sensors 33 installed on the front surface of the main body 10 and a guide surface 34 guiding ultrasonic waves transmitted from the ultrasonic sensors 33 and extending in parallel with the ground surface. The guide surface 34 may be formed of a material effectively reflecting ultrasonic waves. That is, the guide surface 34 may be formed of plastic.

The ultrasonic sensors 33 are disposed such that ultrasonic waves transmitted from the ultrasonic sensors 33 travel in the forward direction of the main body 10, and the guide surface 34 may shield ultrasonic waves transmitted to a specific position.

In the present invention, the ultrasonic sensors 33 do not face upward but face forward and thus, lowering of sensing ability of an obstacle located in front of the main body 10 may be prevented.

The guide surface 34 may block a part of ultrasonic waves traveling downward among ultrasonic waves transmitted from the ultrasonic sensors 33. That is, the guide surface 34 may guide ultrasonic waves in the horizontal direction so that an object not exceeding a designated height is not sensed as an obstacle.

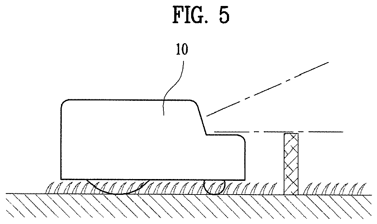

As exemplarily shown in FIG. 5, the ultrasonic sensors 10 may not sense an obstacle having a height of about 10 cm located within the range of 30 cm from the main body 10. The reason for this is that, if a lawn within the work area is not mowed for a long time, the lawn may grow to a height of about 10 cm from the ground surface. If the lawn of a height of 10 cm is sensed as an obstacle of the lawn mower robot, many problems as to movement of the main body 10 may occur. Therefore, in the present invention, the lawn mower robot is adjusted such that, if the height of an object does not exceed a specific value, the object is not recognized as an obstacle.

The ultrasonic sensors 33 may generate ultrasonic waves within the range of an angle of about 50 degrees in the vertical direction. Particularly, the ultrasonic sensors 33 may generate ultrasonic waves in the range of an angle of ±25°.

As exemplarily shown in FIG. 1B, the first sensing unit 32 may include the plurality of ultrasonic sensors 33.

The guide surface 34 may form one flat surface so as to guide ultrasonic waves transmitted from the plurality of ultrasonic sensors 33. That is, the plurality of ultrasonic sensors 33 is installed at the same height, as exemplarily shown in FIG. 1A, and particularly, may be disposed on the front surface of the main body 10 in the width direction, as exemplarily shown in FIG. 1B.

Therefore, the guide surface 34 may be formed to guide ultrasonic waves transmitted from all the ultrasonic sensors 33. The guide surface 34 may be disposed on the front surface of the main body 10, extend to a designated length (L) on the front surface of the main body 10, and be provided in parallel with the ground surface.

Since the guide surface 34 has a designated width (W) or more, the front portions of the ultrasonic sensors 33, having a smaller width (w), provide a sufficient coverage. Therefore, foreign substances do not block the front portions of the ultrasonic sensors 33 so as not to disturb progress of ultrasonic waves transmitted from the ultrasonic sensors 33.

The ultrasonic sensors 33 may transmit ultrasonic waves forward at an angle of about 100 degrees (particularly, about ±50°) in the horizontal direction. Therefore, about three ultrasonic sensors 33 may be installed on the main body 10 such that the central direction of each of the ultrasonic sensors 33 faces the front surface of the main body 10 and thus, sense an obstacle located in front of the main body 10.

The first sensing unit 32 may be installed on a cover 12 forming the external appearance of the main body 10. That is, the ultrasonic sensors 33 may be disposed on the front surface of the cover 12, and the guide surface 34 may be disposed on the front surface of the cover 12 in front of the ultrasonic sensors 33.

That is, the ultrasonic sensors 33 may be installed at a higher position than the guide surface 34 so that the guide surface 34 may guide the moving direction of ultrasonic waves transmitted from the ultrasonic sensors 33.

The main body 10 may include the cover 12 colliding with an obstacle and a body 14 installed within the cover 12. Electronic parts, such as a PCB, motors to rotating the wheels, and a rechargeable battery, may be installed in the body 14.

The cover 12 may be combined with the body 14 so as to move relative to the body 14. That is, although impact is applied to the cover 12, the cover 12 may move relative to the body 14 and thus, the degree of impact applied to the cover 12 is not transmitted to the body 14 as it is. Therefore, although the main body 10 collides with an obstacle, the degree of impact applied to the main body 10 is not transmitted to the body 14 as it is, and damage to the controller 20 installed in the main body 10 may be prevented.

Here, the second sensing unit 36 may be installed at a connection region between the cover 12 and the body 14. Therefore, the second sensing unit 36 may transmit a signal, generated by relative moment of the cover 12 to the body 14 due to collision of the main body 10 with an obstacle, to the controller 20.

Of course, the second sensing unit 36 may include various types of sensors which may sense collision of the main body 10 with an obstacle.

The controller 20 may control movement of the main body 10 by the signals sensed by the first sensing unit 32 and the second sensing unit 36. That is, the controller 30 controls operation of the drive unit 40 according to corresponding information, thus moving the main body 10.

That is, the controller 20 may adjust the velocity of the main body 10 according to information transmitted from the first sensing unit 32, i.e., a distance between the main body 10 and an obstacle. That is, the controller 20 may decelerate the main body 10 to different velocities according to the distance between the main body 10 and the obstacle.

Further, the controller 20 may differently control movement of the main body 10 according to information transmitted from the second sensing unit 36, i.e., whether or not the main body 10 collides with an obstacle.

An obstacle may be an immovable object, such as a tree, or a movable object, such as a person. When the main body 10 senses an obstacle, such as a tree, the obstacle is present at a corresponding position at all times. On the other hand, when the main body 10 senses an obstacle, such as a person, the person may avoid the main body 10 or the person may stay at a current position even if the person recognizes the main body 10. Further, the person may suddenly appear at a position close to the main body 10.

That is, when the main body 10 collides with an obstacle, the main body 10 may be stopped and change direction. When the main body 10 collides with the obstacle, it is impossible for the main body 10 to move in the same direction any more. Therefore, the controller 20 may control the drive unit 40 so that the moving direction of the main body 10 is changed.

On the other hand, although the main body 10 senses an obstacle and moves to a corresponding position, when the main body 10 does not collide with the obstacle, the decelerated velocity may be increased again to the normal velocity. In this case, the main body 10 may not change direction.

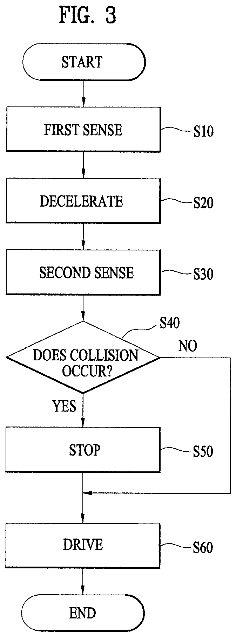

FIG. 3 is a control flowchart of the lawn mower robot in accordance with the embodiment of the present invention. Hereinafter, a control method of the lawn mower robot will be described with reference to FIG. 3.

In order to define the work area of the lawn mower robot, a user may install the boundary wire 110 at the boundary of the work area. Due to the boundary wire 110, the lawn mower robot may mow a lawn located within the work area without deviation of the main body 10 from the work area.

The lawn mower robot may mow a lawn located within the work area while the main body 10 drives within the work area at the normal velocity, for example, 500mm/sec.

The main body 10 may sense whether or not an obstacle is present in front of the main body 10 through the first sensing unit 32 while driving within the work area (Operation S10). When the first sensing unit 32 senses an obstacle, the first sensing unit 32 may detect a distance between the obstacle and the main body 10.

When the obstacle in front of the main body 10 is sensed, the controller 20 may control the drive unit 40 to decelerate the main body 10 (Operation S20). Since the velocity of the main body 10 is reduced, even if the main body 10 collides with the obstacle, impact applied to the main body 10 may be reduced.

Here, the controller 20 may decelerate the main body 10 to different velocities according to distances between the obstacle and the main body 10. Further, the controller 20 may vary a deceleration time, for which the main body 10 is decelerated from the normal velocity, according to distances between the obstacle and the main body 10.

For example, if an obstacle located within 30 cm from the main body 10 is sensed, the main body 10 may be decelerated to 340 mm/sec. Further, if the obstacle located within 30 cm from the main body 10 is sensed, the main body 10 may be decelerated for 3 seconds.

If an obstacle located within 25 cm from the main body 10 is sensed, the main body 10 may be decelerated to 240 mm/sec. Further, if the obstacle located within 25 cm from the main body 10 is sensed, the main body 10 may be decelerated for 2.5 seconds.

If an obstacle located within 22 cm from the main body 10 is sensed, the main body 10 may be decelerated to 150 mm/sec. Further, if the obstacle located within 22 cm from the main body 10 is sensed, the main body 10 may be decelerated for 2.5 seconds.

That is, if an obstacle having a small distance from the main body 10 is sensed, the deceleration degree of the main body 10 may increase and the deceleration time of the main body 10 may increase. As a distance of the main body 10 from an obstacle is small, the impact degree of the main body 10 during collision with the obstacle may be reduced by rapidly decelerating the main body 10.

The main body 10 may move to the position of the obstacle sensed by the first sensing unit 32. Here, the main body 10 may move to the corresponding position in a state decelerated from the normal velocity.

When the main body 10 reaches the obstacle, the main body 10 may collide with the obstacle (Operation S40).

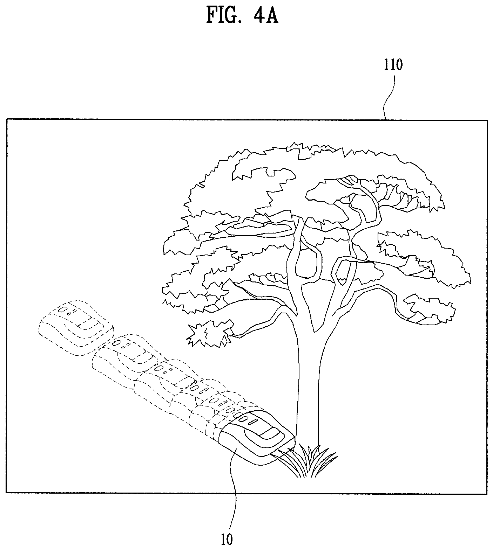

If the obstacle is a fixed object, such as a tree, as exemplarily shown in FIG. 4A, the main body 10 may collide with the obstacle at a moment when the main body 10 reaches the position sensed by the first sensing unit 32.

At this time, the controller 20 may judge whether or not the main body 10 collides with the obstacle through the second sensing unit 36.

When the main body 10 collides with the obstacle, the main body 10 does not move in the same direction any more and is stopped (Operation S50).

Then, the controller 20 may control the main body 10 to change direction so that the main body 10 may avoid the obstacle and move to another position within the work area (Operation S60). In this case, unless the main body 10 senses another obstacle, the controller 20 may control the main body 10 to move at the normal velocity.

At this time, the main body 10 may move backward and then change direction.

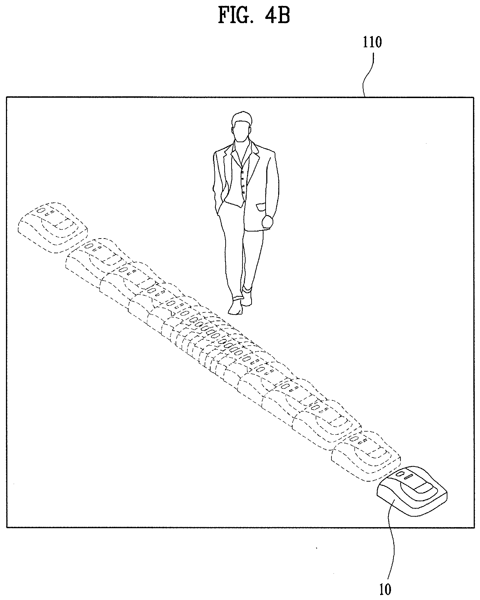

If the obstacle is a movable object, such as a person, as exemplarily shown in FIG. 4B, the main body 10 may not collide with the obstacle even when the main body 10 reaches the position sensed by the first sensing unit 32. The reason for this is that the person may move from the position sensed by the first sensing unit 32 and the obstacle may disappear at the corresponding position after time goes by.

Although the main body 10 moves to the position of the obstacle sensed by the first sensing unit 32, when the main body 10 does not collide with the obstacle, the controller 20 may accelerate the main body 10 to the normal velocity under the condition that the moving direction of the main body 10 is maintained.

When the main body 10 does not collide with the obstacle, a distance during which the main body 10 drives at a lower velocity than the normal velocity, i.e., a deceleration section, may be longer than a section where the first sensing unit 32 senses that the obstacle is located. That is, the main body 10 may move at the normal velocity after it is judged that the main body 10 sufficiently passes by the obstacle, in consideration of a measurement error of the first sensing unit 32.

While the main body 10 drives within the work area, i.e., while the first sensing unit 32 and the second sensing unit 36 are operated, the cutter 50 may be operated. Since the main body 10 drives within the work area, the cutter 50 is operated to mow a lawn within the work area.

That is, in the present invention, driving of the main body 10 may be differently controlled according to whether or not the main body 10 collides with an obstacle, i.e., whether or not the second sensing unit 36 senses collision between the main body and the obstacle.

As apparent from the above description, a lawn mower robot in accordance with one embodiment of the present invention may be decelerated when an obstacle is sensed and thus prevent damage to the obstacle or the lawn mower robot. Particularly, if the obstacle is a movable person, impact applied to the person may be reduced and time to avoid the lawn mower robot may be provided to the person.

Further, the lawn mower robot in accordance with the embodiment of the present invention may be decelerated around an obstacle and thus provide a perception to a user that the lawn mower robot recognizes the obstacle.

Further, since, although an obstacle is recognized, the lawn mower robot in accordance with the embodiment of the present invention moves until the lawn mower robot collides with the obstacle, the range of a lawn mowed by the lawn mower robot may be extended to a region adjacent to the obstacle.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A control method of a lawn mower robot being configured to be operated in a work area defined by a boundary indication (100) unit,
comprising:
sensing (S10) whether or not an obstacle is present during driving at a normal velocity;
**characterized by**:
decelerating (S20) the lawn mower robot, when the obstacle is sensed, to different velocities according to a distance between the obstacle and the lawn mower robot;
sensing (S30) whether or not the lawn mower robot collides with the obstacle in the decelerated state; and
driving differently the lawn mower robot between if a collision of the lawn mower robot with the obstacle is sensed and if a collision of the lawn mower robot with the obstacle is not sensed.

2. The control method according to claim 1, wherein, in the sensing (S10) as to whether or not an obstacle is present, a distance from the obstacle is sensed.

3. The control method according to claim 1 or 2, wherein, in the deceleration (S20) of the lawn mower robot, a deceleration time varies according to distances from the obstacle.

4. The control method according to any of claims 1 to 3, wherein, in the deceleration (S20) of the lawn mower robot, a distance during which the lawn mower robot is decelerated is longer than the distance from the obstacle.

5. The control method according to any of claims 1 to 4, wherein, in the driving of the lawn mower robot, if the collision is sensed (S40), the lawn mower robot is stopped (S50) and changes direction.

6. The control method according to claim 5, wherein, in the driving of the lawn mower robot, the lawn mower robot is accelerated to the normal velocity (S60) after change of direction.

7. The control method according to any of claims 1 to 6, wherein, in the driving of the lawn mower robot, if the collision is not sensed (S40), the lawn mower robot is accelerated to the normal velocity (S60) under the condition that the direction of the lawn mower robot is maintained.

8. The control method according to any of claims 1 to 7, wherein the obstacle includes a fixed obstacle or a movable obstacle.

9. The control method according to any of claims 1 to 8, wherein a cutter (50) cutting a lawn is operated during each of the sensing (S10) as to whether or not an obstacle is present, the deceleration (S20) of the lawn mower robot, the sensing (S20) as to whether or not the lawn mower robot collides with the obstacle in the decelerated state, and the driving of the lawn mower robot.

10. The control method according to any of claims 1 to 9, comprising:
changing direction of the lawn mower robot and then driving the lawn mower robot when the lawn mower robot collides with the obstacle,
wherein a cutter (50) is operated during each of the sensing (S10) as to whether or not an obstacle is present, the deceleration (S20) of the lawn mower robot, and the change of the direction of the lawn mower robot and driving of the lawn mower robot.

11. The control method according to claim 10, wherein, in the deceleration (S20) of the lawn mower robot, a distance during which deceleration of the lawn mower robot is carried out is longer than a distance from the obstacle.

12. The control method according to claim 10 or 11, wherein, in the deceleration (S20) of the lawn mower robot, the lawn mower robot is decelerated to different velocities according to distances from the obstacle.

13. A lawn mower robot being configured to be operated in a work area defined
by a boundary indication unit (100); and comprising:
a main body (10) configured to move within the work area,
wherein the main body (10) includes:
a first sensing unit (32) sensing an obstacle located within the work area;
a second sensing unit (36) sensing whether or not the main body (10) collides with the obstacle; and
a controller (20) controlling movement of the main body (10) according to signals sensed by the first sensing unit (32) and the second sensing unit (36),
**characterized in that**
the controller (20) is configured to decelerate the main body (10) when the obstacle is sensed by the first sensing unit (32) to different velocities according to a distance between the obstacle and the main body (10),
the controller (20) is configured to sense whether or not the lawn mower robot collides with the obstacle in the decelerated state; and
the controller (20) is configured to drive differently the lawn mower robot between if a collision of the lawn mower robot with the obstacle is sensed and if a collision of the lawn mower robot with the obstacle is not sensed by the second sensing unit (36)

14. The lawn mower robot according to claim 13, wherein the first sensing unit (32) senses a distance from the obstacle to the main body (10).

15. The lawn mower robot according to claim 13 or 14, wherein the controller (20) decelerates the main body (10) during a distance longer than the distance from the obstacle.

16. The lawn mower robot according to any of claims 13 to 15, wherein the controller (20) stops the main body (10) and changes the direction of the main body (10), if the main body (10) collides with the obstacle.

17. The lawn mower robot according to any of claims 13 to 16, wherein the controller (20) accelerates the main body (10) to the normal velocity under the condition that the direction of the main body (10) is maintained, if the main body (10) does not collide with the obstacle at a position of the obstacle, judged by the first sensing unit (10).

18. The lawn mower robot according to any of claims 13 to 17, wherein the main body (10) further includes a cutter (50) cutting a lawn,
wherein the controller (20) operates the cutter (50) during driving of the first sensing unit (32) or the second sensing unit (36).

19. The lawn mower robot according to any of claims 13 to 18, wherein the first sensing unit (32) includes:
an ultrasonic sensor (33) installed on the front surface of the main body (10); and
a guide surface (34) guiding ultrasonic waves transmitted from the ultrasonic sensors (33) and extending in parallel with the ground surface.

20. The lawn mower robot according to claim 19, wherein the guide surface (34)blocks a part of ultrasonic waves traveling downward among the ultrasonic waves transmitted from the ultrasonic sensors (33) and guides the ultrasonic waves in the horizontal direction so that an object not exceeding a designated height is not sensed as an obstacle.

21. The lawn mower robot according to claim 19, wherein:
the first sensing unit (32) includes a plurality of ultrasonic sensors (33); and
the guide surface (34) forms one flat surface so as to guide ultrasonic waves transmitted from the plurality of ultrasonic sensors (33).

22. The lawn mower robot according to claim 21, wherein the width of the guide surface (34) is greater than the overall width of the plurality of ultrasonic sensors (33).

23. A system comprising a lawn mower robot according to any of claims 13 to 22 and a boundary indication unit defining a work area.

## Patentansprüche

1. Steuerverfahren für einen Rasenmähroboter, der konfiguriert ist, in einem Arbeitsbereich betrieben zu werden, der durch eine Begrenzungsindikationseinheit (100) definiert ist,
das aufweist:
Erfassen (S10), ob ein Hindernis vorhanden ist, während des Fahrens mit einer normalen Geschwindigkeit;
**gekennzeichnet, durch**:
Verlangsamen (S20) des Rasenmähroboters, wenn das Hindernis erfasst wird, auf unterschiedliche Geschwindigkeiten entsprechend einer Entfernung zwischen dem Hindernis und dem Rasenmähroboter;
Erfassen (S30), ob der Rasenmähroboter mit dem Hindernis im verlangsamten Zustand kollidiert; und
unterschiedliches Fahren des Rasenmähroboters abhängig davon, ob eine Kollision des Rasenmähroboters mit dem Hindernis erfasst wird und ob eine Kollision des Rasenmähroboters mit dem Hindernis nicht erfasst wird.

2. Steuerverfahren nach Anspruch 1, wobei beim Erfassen (S10), ob ein Hindernis vorhanden ist, eine Entfernung vom Hindernis erfasst wird.

3. Steuerverfahren nach Anspruch 1 oder 2, wobei bei der Verlangsamung (S20) des Rasenmähroboters eine Verlangsamungszeit entsprechend Entfernungen vom Hindernis variiert.

4. Steuerverfahren nach einem der Ansprüche 1 bis 3, wobei bei der Verlangsamung (S20) des Rasenmähroboters eine Entfernung, während derer der Rasenmähroboter verlangsamt wird, länger als die Entfernung vom Hindernis ist.

5. Steuerverfahren nach einem der Ansprüche 1 bis 4, wobei beim Fahren des Rasenmähroboters, wenn die Kollision erfasst wird (S40), der Rasenmähroboter gestoppt wird (S50) und seine Richtung ändert.

6. Steuerverfahren nach Anspruch 5, wobei beim Fahren des Rasenmähroboters, der Rasenmähroboter nach der Richtungsänderung auf die normale Geschwindigkeit (S60) beschleunigt wird.

7. Steuerverfahren nach einem der Ansprüche 1 bis 6, wobei beim Fahren des Rasenmähroboters, wenn die Kollision nicht erfasst wird (S40), der Rasenmähroboter unter der Voraussetzung, dass die Richtung des Rasenmähroboters beibehalten wird, auf die normale Geschwindigkeit (S60) beschleunigt wird.

8. Steuerverfahren nach einem der Ansprüche 1 bis 7, wobei das Hindernis ein festes Hindernis oder ein bewegliches Hindernis aufweist.

9. Steuerverfahren nach einem der Ansprüche 1 bis 8, wobei eine Schneideeinrichtung (50), die einen Rasen schneidet, jeweils während des Erfassens (S10), ob ein Hindernis vorhanden ist, der Verlangsamung (S20) des Rasenmähroboters, des Erfassens (S20), ob der Rasenmähroboter mit dem Hindernis im verlangsamten Zustand kollidiert, und des Fahrens des Rasenmähroboters betrieben wird.

10. Steuerverfahren nach einem der Ansprüche 1 bis 9, das aufweist:
Ändern der Richtung des Rasenmähroboters und dann Fahren des Rasenmähroboters, wenn der Rasenmähroboter mit dem Hindernis kollidiert,
wobei eine Schneideeinrichtung (50) jeweils während des Erfassens (S10), ob ein Hindernis vorhanden ist, der Verlangsamung (S20) des Rasenmähroboters und der Richtungsänderung des Rasenmähroboters und des Fahrens des Rasenmähroboters betrieben wird.

11. Steuerverfahren nach Anspruch 10, wobei bei der Verlangsamung (S20) des Rasenmähroboters eine Entfernung, während derer die Verlangsamung des Rasenmähroboters ausgeführt wird, länger als eine Entfernung vom Hindernis ist.

12. Steuerverfahren nach Anspruch 10 oder 11, wobei bei der Verlangsamung (S20) des Rasenmähroboters der Rasenmähroboter entsprechend Entfernungen vom Hindernis auf unterschiedliche Geschwindigkeiten beschleunigt wird.

13. Rasenmähroboter, der konfiguriert ist, in einem Arbeitsbereich betrieben zu werden, der durch eine Begrenzungsanzeigeeinheit (100) definiert ist; und der aufweist:
einen Hauptkörper (10), der konfiguriert ist, sich im Arbeitsbereich zu bewegen, wobei der Hauptkörper (10) aufweist:
eine erste Erfassungseinheit (32), die ein Hindernis erfasst, das sich im Arbeitsbereich befindet;
eine zweite Erfassungseinheit (36), die erfasst, ob der Hauptkörper (10) mit dem Hindernis kollidiert; und
eine Steuereinrichtung (20), die die Bewegung des Hauptkörpers (10) entsprechend Signalen steuert, die durch die erste Erfassungseinheit (32) und die zweite Erfassungseinheit (36) erfasst werden,
**dadurch gekennzeichnet, dass**
die Steuereinrichtung (20) konfiguriert ist, den Hauptkörper (10), wenn das Hindernis durch die erste Erfassungseinheit (32) erfasst wird, entsprechend einer Entfernung zwischen dem Hindernis und dem Hauptkörper (10) auf unterschiedliche Geschwindigkeiten zu verlangsamen,
die Steuereinrichtung (20) konfiguriert ist zu erfassen, ob der Rasenmähroboter mit dem Hindernis im verlangsamten Zustand kollidiert; und
die Steuereinrichtung (20) konfiguriert ist, den Rasenmähroboter abhängig davon, ob eine Kollision des Rasenmähroboters mit dem Hindernis erfasst wird und ob eine Kollision des Rasenmähroboters mit dem Hindernis nicht durch die zweite Erfassungseinheit (36) erfasst wird, unterschiedlich zu fahren.

14. Rasenmähroboter nach Anspruch 13, wobei die erste Erfassungseinheit (32) eine Entfernung vom Hindernis zum Hauptkörper (10) erfasst.

15. Rasenmähroboter nach Anspruch 13 oder 14, wobei die Steuereinrichtung (20) den Hauptkörper (10) während einer längeren Entfernung als die Entfernung vom Hindernis verlangsamt.

16. Rasenmähroboter nach einem der Ansprüche 13 bis 15, wobei die Steuereinrichtung (20) den Hauptkörper (10) stoppt und die Richtung des Hauptkörpers (10) ändert, wenn der Hauptkörper (10) mit dem Hindernis kollidiert.

17. Rasenmähroboter nach einem der Ansprüche 13 bis 16, wobei die Steuereinrichtung (20) unter der Voraussetzung, dass die Richtung des Hauptkörpers (10) beibehalten wird, den Hauptkörper (10) auf die normale Geschwindigkeit beschleunigt, wenn der Hauptkörper (10) nicht mit dem Hindernis an einer Position des Hindernisses kollidiert, was durch die erste Erfassungseinheit (10) beurteilt wird.

18. Rasenmähroboter nach einem der Ansprüche 13 bis 17, wobei der Hauptkörper (10) ferner eine Schneideeinrichtung (50) aufweist, die einen Rasen schneidet,
wobei die Steuereinrichtung (20) die Schneideeinrichtung (50) während des Ansteuerns der ersten Erfassungseinheit (32) oder der zweiten Erfassungseinheit (36) betreibt.

19. Rasenmähroboter nach einem der Ansprüche 13 bis 18, wobei die erste Erfassungseinheit (32) aufweist:
einen Ultraschallsensor (33), der an der Vorderseite des Hauptkörpers (10) angebracht ist; und
eine Führungsfläche (34), die von den Ultraschallsensoren (33) gesendete Ultraschallwellen leitet und sich parallel zur Bodenoberfläche erstreckt.

20. Rasenmähroboter nach Anspruch 19, wobei die Führungsfläche (34) einen Teil der Ultraschallwellen, die sich nach unten ausbreiten, unter den von den Ultraschallsensoren (33) gesendeten Ultraschallwellen blockiert und die Ultraschallwellen in die horizontale Richtung leitet, so dass ein Objekt, dass eine festgelegte Höhe nicht überschreitet, nicht als Hindernis erfasst wird.

21. Rasenmähroboter nach Anspruch 19, wobei:
die erste Erfassungseinheit (32) mehrere Ultraschallsensoren (33) aufweist; und
die Führungsfläche (34) eine ebene Fläche bildet, um die von den mehreren Ultraschallsensoren (33) gesendeten Ultraschallwellen zu leiten.

22. Rasenmähroboter nach Anspruch 21, wobei die Breite der Führungsfläche (34) größer als die Gesamtbreite der mehreren Ultraschallsensoren (33) ist.

23. System, das einen Rasenmähroboter nach einem der Ansprüche 13 bis 22 und eine Begrenzungsindikationseinheit aufweist, die einen Arbeitsbereich definiert.

## Revendications

1. Procédé de commande d'une tondeuse à gazon robotisée prévue pour être mise en service dans une zone de travail définie par une unité d'indication de limites (100), comprenant :
la détection (S10) si un obstacle est présenté ou non pendant la marche à vitesse normale ;
**caractérisé par** :
la décélération (S20) de la tondeuse à gazon robotisée si l'obstacle est détecté, à des vitesses différentes en fonction d'une distance entre l'obstacle et la tondeuse à gazon robotisée ;
la détection (S30) si la tondeuse à gazon robotisée bute ou non contre l'obstacle en état de décélération ; et
l'entraînement différencié de la tondeuse à gazon robotisée selon qu'une collision de la tondeuse à gazon robotisée avec l'obstacle est détectée ou qu'une collision de la tondeuse à gazon robotisée avec l'obstacle n'est pas détectée.

2. Procédé de commande selon la revendication 1, où, lors de la détection (S10) si un obstacle est présenté ou non, une distance à l'obstacle est détectée.

3. Procédé de commande selon la revendication 1 ou la revendication 2, où, lors de la décélération (S20) de la tondeuse à gazon robotisée, une durée de décélération varie en fonction des distances à l'obstacle.

4. Procédé de commande selon l'une des revendications 1 à 3, où, lors de la décélération (S20) de la tondeuse à gazon robotisée, une distance sur laquelle la tondeuse à gazon robotisée est décélérée est supérieure à la distance à l'obstacle.

5. Procédé de commande selon l'une des revendications 1 à 4, où, lors de l'entraînement de la tondeuse à gazon robotisée, si la collision est détectée (S40), la tondeuse à gazon robotisée est arrêtée (S50) et change de direction.

6. Procédé de commande selon la revendication 5, où, lors de l'entraînement de la tondeuse à gazon robotisée, la tondeuse à gazon robotisée est accélérée vers la vitesse normale (S60) après le changement de direction.

7. Procédé de commande selon l'une des revendications 1 à 6, où, lors de l'entraînement de la tondeuse à gazon robotisée, si la collision n'est pas détectée (S40), la tondeuse à gazon robotisée est accélérée vers la vitesse normale (S60) à la condition que la direction de la tondeuse à gazon robotisée soit maintenue.

8. Procédé de commande selon l'une des revendications 1 à 7, où l'obstacle comprend un obstacle fixe ou un obstacle mobile.

9. Procédé de commande selon l'une des revendications 1 à 8, où une lame (50) de tonte du gazon est mise en service pendant la détection (S10) si un obstacle est présenté ou non, pendant la décélération (S20) de la tondeuse à gazon robotisée, pendant la détection (S20) si la tondeuse à gazon robotisée bute ou non l'obstacle en état de décélération, et pendant l'entraînement de la tondeuse à gazon robotisée.

10. Procédé de commande selon l'une des revendications 1 à 9, comprenant :
le changement de direction de la tondeuse à gazon robotisée, puis l'entraînement de la tondeuse à gazon robotisée quand la tondeuse à gazon robotisée bute contre l'obstacle,
une lame (50) étant mise en service pendant la détection (S10) si un obstacle est présenté ou non, pendant la décélération (S20) de la tondeuse à gazon robotisée, et pendant le changement de direction de la tondeuse à gazon robotisée et l'entraînement de la tondeuse à gazon robotisée.

11. Procédé de commande selon la revendication 10, où, lors de la décélération (S20) de la tondeuse à gazon robotisée, une distance sur laquelle la décélération de la tondeuse à gazon robotisée est exécutée est supérieure à une distance à l'obstacle.

12. Procédé de commande selon la revendication 10 ou la revendication 11, où, lors de la décélération (S20) de la tondeuse à gazon robotisée, la tondeuse à gazon robotisée est décélérée à des vitesses différentes en fonction des distances à l'obstacle.

13. Tondeuse à gazon robotisée prévue pour être mise en service dans une zone de travail définie par une unité d'indication de limites (100), comprenant :
un corps principal (10) prévu pour se déplacer à l'intérieur de la zone de travail, ledit corps principal (10) comprenant :
une première unité de détection (32) détectant un obstacle situé à l'intérieur de la zone de travail ;
une deuxième unité de détection (36) détectant si le corps principal (10) bute ou non contre l'obstacle ; et
un dispositif de commande (20) commandant le déplacement du corps principal (10) en fonction des signaux détectés par la première unité de détection (32) et la deuxième unité de détection (36),
**caractérisé en ce que**
le dispositif de commande (20) est prévu pour décélérer le corps principal (10) si l'obstacle est détecté par la première unité de détection (32), à des vitesses différentes en fonction d'une distance entre l'obstacle et le corps principal (10),
le dispositif de commande (20) est prévu pour détecter si la tondeuse à gazon robotisée bute ou non contre l'obstacle en état de décélération ; et
le dispositif de commande (20) est prévu pour entraîner de manière différenciée la tondeuse à gazon robotisée selon qu'une collision de la tondeuse à gazon robotisée avec l'obstacle est détectée ou qu'une collision de la tondeuse à gazon robotisée avec l'obstacle n'est pas détectée par la deuxième unité de détection (36).

14. Tondeuse à gazon robotisée selon la revendication 13, où la première unité de détection (32) détecte une distance de l'obstacle au corps principal (10).

15. Tondeuse à gazon robotisée selon la revendication 13 ou la revendication 14, où le dispositif de commande (20) ralentit le corps principal (10) sur une distance supérieure à la distance à l'obstacle.

16. Tondeuse à gazon robotisée selon l'une des revendications 13 à 15, où le dispositif de commande (20) arrête le corps principal (10) et change la direction du corps principal (10) si le corps principal (10) bute contre l'obstacle.

17. Tondeuse à gazon robotisée selon l'une des revendications 13 à 16, où le dispositif de commande (20) accélère le corps principal (10) vers la vitesse normale à la condition que la direction du corps principal (10) soit maintenue, si le corps principal (10) ne bute pas contre l'obstacle à un emplacement de l'obstacle estimé par la première unité de détection (10).

18. Tondeuse à gazon robotisée selon l'une des revendications 13 à 17, où le corps principal (10) comprend en outre une lame (50) de tonte du gazon,
le dispositif de commande (20) mettant la lame (50) en service pendant la commande de la première unité de détection (32) ou de la deuxième unité de détection (36).

19. Tondeuse à gazon robotisée selon l'une des revendications 13 à 18, où la première unité de détection (32) comprend :
un capteur à ultrasons (33) monté sur la surface avant du corps principal (10) ; et
une surface de guidage (34) guidant les ondes ultrasonores transmises par les capteurs à ultrasons (33) et s'étendant parallèlement à la surface du sol.

20. Tondeuse à gazon robotisée selon la revendication 19, où la surface de guidage (34) bloque une partie des ondes ultrasonores se déplaçant vers le bas parmi les ondes ultrasonores transmises par les capteurs à ultrasons (33) et guide les ondes ultrasonores dans la direction horizontale, de telle manière qu'un objet ne dépassant pas une hauteur définie n'est pas détecté comme un obstacle.

21. Tondeuse à gazon robotisée selon la revendication 19, où :
la première unité de détection (32) comprend une pluralité de capteurs à ultrasons (33) ; et
la surface de guidage (34) forme une surface plane de manière à guider les ondes ultrasonores transmises par la pluralité de capteurs à ultrasons (33).

22. Tondeuse à gazon robotisée selon la revendication 21, où la largeur de la surface de guidage (34) est supérieure à la largeur totale de la pluralité de capteurs à ultrasons (33).

23. Système, comprenant une tondeuse à gazon robotisée selon l'une des revendications 13 à 22 et une unité d'indication de limites définissant une zone de travail.
